# EUROPEAN PATENT APPLICATION

(11) **EP 3 197 228 A1**
(43) Date of publication of application: **26.07.2017**
(21) Application number: 15853251.5
(22) Date of filing: 21.04.2015
(51) Int. Cl.: H04W 72/08

(54) **METHOD AND DEVICE FOR USER ACCESS TO BASE STATION**

(30) Priority: 21.10.2014 CN 201410562141
(71) Applicant: ZTE Corporation, Shenzhen, Guangdong 518057 (CN)
(72) Inventor: WAN, Zuhui, Shenzhen Guangdong 518057 (CN); LIU, Shaolin, Shenzhen Guangdong 518057 (CN); YAO, Wenjun, Shenzhen Guangdong 518057 (CN)
(74) Representative: Awapatent AB
(86) International application number: PCT/CN2015/077116
(87) International publication number: WO 2016/062047

(57) **Abstract**

A method and device for a user to access a base station are provided, which relate to a method and device for a user with a priority to access when resources of a base station are insufficient. Herein, the method includes: a base station receives an access request of a user; determines an attribute of a user to be accessed according to a priority and resource consumption condition of the user; and accesses the user. Herein, the device includes: a resource consumption module, a judging module, a resource release module and an establishment module. Through the method provided by the present invention, a delay caused by multiple times of information interaction between a base station and a base station controller is avoided when the user accesses, and the problem in the existing art that the real-time performance of the access of users with priorities cannot be guaranteed is solved.

## Description

### Technical Field

The present invention relates to a method and a device for a user to access, in particular to a method and device for a user with a priority to access when resources of a base station are insufficient.

### Background

At present, in the field of mobile communications, the demand for the real-time access of users with priorities is higher and higher, but if using the method of reserve resources, it will inevitably lead to a large resources waste, so operators usually don't use the method. To solve this problem, the most related technology is to preset user's priority and perform control in the base station controller, perform access according to the priority when the resources of the base station are enough, and separate forcibly the users in terms of the coded channel or power when the resources is not enough.

The defects of the scheme is that the base station controller does not perform any management for wireless resources of the base station, and it is only responsible for the connection between the base station and the mobile phone; in aspect of the signaling, the response message of the base station is used to feed back various wireless parameters of the present base station that the mobile phone needed, and then the base station controller configures these parameters to the mobile phone. Therefore, only after the information is back and forth for many times between the base station controller and the base station, then a current user can be deleted and a new user can be created, which cannot guarantee the real-time performance.

### Summary

In view of the above technical background, the technical problem to be solved by embodiments of the present invention is to provide a method and device for a user with a priority to access a base station, which solves the problem in the existing art that the real-time performance of the access of users with priorities cannot be guaranteed.

To solve the abovementioned technical problem, an embodiment of the present invention provides a method for a user to access a base station, including: a base station receives an access request of a user; determines an attribute of the user to be accessed according to a priority and resource consumption condition of the user; and accesses the user.

In an embodiment of the present invention, the priority of the user is preset by the base station.

In an embodiment of the present invention, the base station determines a resource consumption amount of the user to be accessed according to a cell parameter and an actual consumption amount of the user.

In an embodiment of the present invention, a total amount according to the cell parameter is divided by the number of cell users to obtain a standard consumption amount of various parameters, then takes the maximum of a ratio, which is the ratio of an actual consumption amount of the user to a standard consumption amount, to obtain the resource consumption amount of a current user.

In an embodiment of the present invention, when remaining resources in the base station can meet the access of the user to be accessed, the base station accesses the user to be accessed; when remaining resources in the base station cannot meet the access of the user to be accessed, the base station releases a user with a low priority and occupying relatively many resources in the base station, accesses the user to be accessed.

In an embodiment of the present invention, the cell parameter includes baseband capacity, power, and coded channel of a cell.

Another embodiment of the present invention further provides a device for a user to access a base station, including: a resource consumption module, a judging module, a resource release module and an establishment module. The resource consumption module is configured to calculate a resource consumption amount of a user to be accessed. The judging module is configured to judge remaining resources of the base station. The resource release module is configured to release resources of a user. The establishment module is configured to access the user to be accessed.

The resource consumption module is configured to calculate a resource consumption amount of the user to be accessed according to a cell parameter and the actual resource consumption of the user in the base station.

The judging module is configured to judge whether remaining resources of the base station meet resources required by an access of the user to be accessed.

The resource release module is configured to release resources of a current user with a low priority and occupying relatively many resources when remaining resources of the base station cannot meet the access of the user to be accessed.

Embodiments of the present invention provide a method and device for a user to access a base station. The method includes: a base station receives an access request of a user; judges an attribute of the user according to a priority and resource consumption condition of the user; and accesses the user. Compared to the existing art, through the method provided by the embodiment of the present invention, for the access of the user with a priority, the whole process is completed in the base station, which includes the process from the reception of the access request to the judgment of the priority and the calculation of the resource consumption, and then from the release of resources of a current user to the access of the user with a priority. Therefore, the delay caused by the process of the signaling interaction between the base station and the base station controller is avoided, and the real-time performance of the access of user with a priority is guaranteed.

### Brief Description of Drawings

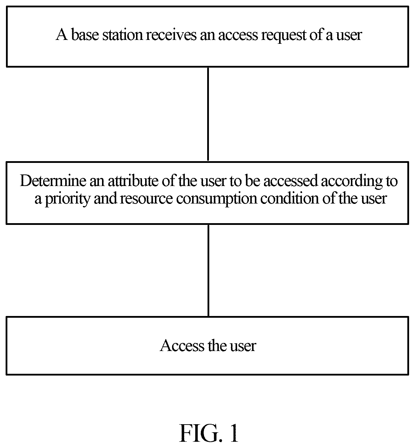

FIG. 1 is a schematic diagram of steps according to an embodiment of the present invention.
FIG. 2 is a flow chart of a method according to an embodiment of the present invention.
FIG. 3 is a structural schematic diagram of a device according to an embodiment of the present invention.

### Detailed Description

The embodiments of the technical scheme will be described below in detail in combination with the drawings from the view of WCDMA.

### Embodiment one

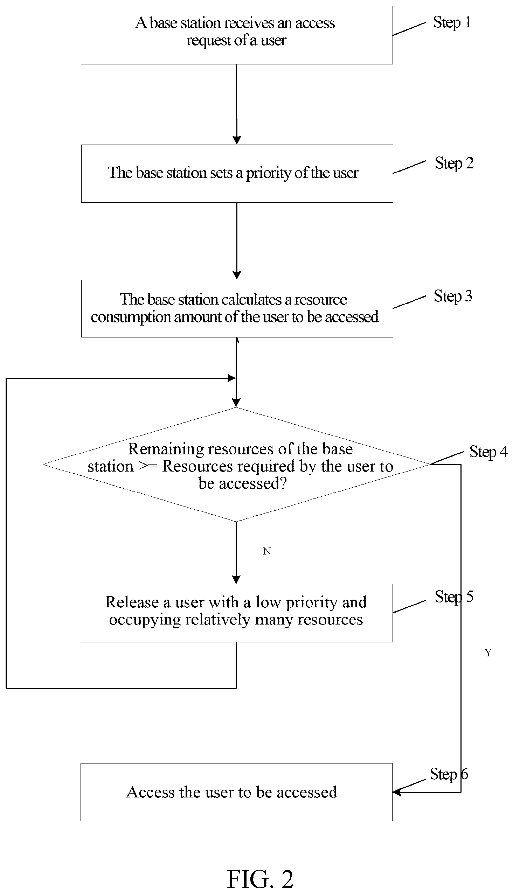

An embodiment of the present invention provides a method for a user to access a base station, referring to FIG. 2. FIG. 2 is a flow chart of the method, and the method includes the following steps 1-6.

In step 1, a base station presets a priority of the user.

In step 2, the base station calculates a resource consumption amount of the user to be accessed.

In step 3, it is judged whether remaining resources of the base station meet the access of the user to be accessed.

In step 4, if remaining resources of the base station can meet the access of the user to be accessed, the base station accesses the user to be accessed directly; and if remaining resources of the base station cannot meet the access of the user to be accessed, the step turns to step 5.

In step 5, a user with a low priority and occupying relatively many resources in the base station is released, the step turns to the step 3.

In step 6, the access of the user to be accessed is completed.

The calculation of the resource consumption amount of the user in the above step 2 includes: a total amount according to the cell parameter is divided by the number of cell users to obtain a standard consumption amount according to a corresponding parameter, then the maximum of a ratio which is the ratio of an actual consumption amount of the user to the standard consumption amount is taken to obtain the source consumption amount of the user to be accessed. The cell parameter includes baseband capacity and/or power and/or coded channel of a cell.

### Embodiment two

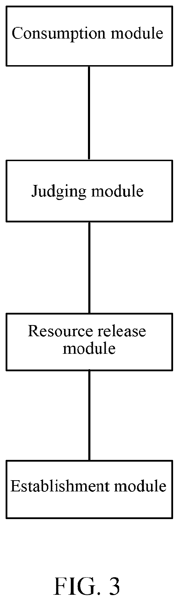

An embodiment of the present invention provides a device for a user to access a base station, referring to FIG. 3. FIG. 3 is a structural schematic diagram of the device. The device includes: a resource consumption module, a judging module, a resource release module and an establishment module. The resource consumption module is configured to calculate a resource consumption amount of the user to be accessed according to a cell parameter and an actual resource consumption of the user in the base station. The judging module is configured to judge whether remaining resources of the base station meet an access of the user to be accessed. The resource release module is configured to release resources of a current user with a low priority and occupying relatively many resources when remaining resources of the base station cannot meet the access of the user to be accessed. The establishment module is configured to complete the access of the user to be accessed.

A computer readable storage medium storing a program instruction is provided, and the above mentioned method can be implemented when the program instruction is executed.

The ordinary person skilled in the art can understand that all or part of steps of the above embodiments can be implemented by using a flow of computer program, and the computer program can be stored in a computer readable memory medium. The computer program is executed on a corresponding hardware platform (such as a system, a device, an apparatus and a component, etc.), and when the computer program is carried out, one of the steps or a combination of the steps of the method embodiments is included.

All or part of the steps of the above embodiments can also be implemented by using integrated circuits, and these steps can be made into individual integrated circuit modules respectively or a plurality of modules or steps can be made into a single integrated circuit module to be implemented. Therefore, the present invention is not limited to any combination of hardware and software in a specific form.

Various apparatuses/functional modules/functional units in the above embodiments can be implemented by using a universal calculating device, and they can be concentrated on a single calculating device or distributed in a network consisting of a plurality of calculating devices.

If implemented in the form of a software function module and sold or used as an independent product, various apparatuses/functional modules/functional units in the above embodiments can be stored in a computer readable memory medium. The above-mentioned computer readable memory medium may be a read-only memory, a magnetic disk or an optical disk, etc.

### Industrial Applicability

Through the method provided by embodiments of the present invention, for the access of the user with a priority, the whole process is completed in the base station, which includes the process from the reception of the access request to the judgment of the priority and the calculation of the resource consumption, and from the release of resources of a current user to the access of the user with a priority. Therefore, the delay caused by the process of the signaling interaction between a base station and a base station controller is avoided, and the real-time performance of the access of the user with the priority is guaranteed.

## Claims

1. A method for a user to access a base station, comprising: a base station receiving an access request of a user; determining an attribute of the user to be accessed according to a priority and resource consumption condition of the user; and accessing the user to be accessed.

2. The method for a user to access a base station according to claim 1, wherein, the priority of the user is preset by the base station.

3. The method for a user to access a base station according to claim 1, wherein, the base station determines a resource consumption amount of the user to be accessed according to a cell parameter and an actual consumption amount of the user.

4. The method for a user to access a base station according to claim 3, wherein, a total amount according to the cell parameter is divided by a number of cell users to obtain a standard consumption amount according to a corresponding parameter, and then takes a maximum of a ratio, which is the ratio of the actual consumption amount of the user to the standard consumption amount, to obtain the resource consumption amount of the user to be accessed.

5. The method for a user to access a base station according to claim 3, wherein, when remaining resources of the base station can meet an access of the user to be accessed, the base station accesses the user to be accessed; when remaining resources of the base station cannot meet the access of the user to be accessed, the base station releases a user with a low priority and occupying resources greater than or equal to a preset value in the base station, and accesses the user to be accessed.

6. The method for a user to access a base station according to claim 4, wherein, the cell parameter comprises baseband capability and/or power and/or coded channel of a cell.

7. A device for a user to access a base station, comprising: a resource consumption module, a judging module, a resource release module and an establishment module;
the resource consumption module is configured to calculate a resource consumption amount of a user to be accessed;
the judging module is configured to judge remaining resources of the base station;
the resource release module is configured to release a resource of a user; and
the establishment module is configured to access the user to be accessed.

8. The device for a user to access a base station according to claim 7, wherein, the resource consumption module is configured to calculate a resource consumption amount of the user to be accessed according to a cell parameter and an actual resource consumption of the user in the base station.

9. The device for a user to access a base station according to claim 7, wherein, the judging module is configured to judge whether remaining resources of the base station meet resources required by an access of the user to be accessed.

10. The device for a user to access a base station according to claim 7, wherein, the resource release module is configured to release resources of a current user with a low priority and occupying relatively many resources when remaining resources of the base station cannot meet the access of the user to be accessed.

11. A computer readable storage medium storing a program instruction, wherein, the method according to any one of claims 1-6 can be implemented when the program instruction is executed.
